# EUROPEAN PATENT APPLICATION

(11) **EP 4 831 148 A1**
(43) Date of publication of application: **28.10.2026**
(21) Application number: 26172888.5
(22) Date of filing: 16.04.2026
(51) Int. Cl.: C04B 41/00, C04B 41/45, C04B 41/87, C04B 41/91

(54) **REPAIRING DEFECTIVE OR DAMAGED COOLING HOLES IN CMC COMPONENTS**

(30) Priority: 16.04.2025 US 202519180501
(71) Applicant: RTX Corporation, Farmington, CT 06032 (US)
(72) Inventor: UCASZ, Mark T., Middletown, 06457 (US); WASSERMAN, David J., Hamden, 06517 (US)
(74) Representative: Dehns

(57) **Abstract**

Defective cooling holes (260) can arise during manufacturing of ceramic matrix composite (CMC) components (200) for gas turbine engines. Damaged cooling holes (250) can occur as a result of, for example, FOD and/or DOD to CMC components during operation. A method is provided for repairing a (CMC) component (200) having one or more defective or damaged cooling holes (250, 260) wherein filling one or more defective or damaged cooling holes (250, 260) are filled by applying a ceramic material patch to form patched cooling hole(s). Subsequently, the patched cooling hole(s) are subjected to a densification process. Thereafter, the patched cooling hole(s) are redrilled to reform the cooling hole(s) of the CMC component (200).

## Description

### FIELD OF THE INVENTION

The present disclosure relates generally to ceramic matrix composites (CMCs) with cooling capabilities. In particular, the present disclosure concerns methods for repairing defective or damaged CMC components.

### BACKGROUND OF THE INVENTION

Gas turbine engines, in general, include a fan section, a compressor section (e.g., a high-pressure compressor module and a low-pressure compressor module), a combustion section, and a turbine section (e.g., a high-pressure turbine module and a low-pressure turbine module). Air enters through the fan section and is compressed in the compressor section before being introduced into the combustion section. In the combustion section, the air is mixed with fuel and ignited to generate a high-energy, high temperature gas flow. The high-energy, high temperature gas flow is expanded in the turbine section which is used to create thrust and drive the compressor and fan sections.

Certain components of gas turbine engines are thus exposed to the high-energy, high temperature gas flow (gaspath), i.e., flow path components. Therefore, it desirable that such components be made of materials with high heat resistance such as ceramic matrix composites (CMCs). CMC components can withstand much higher operating temperatures (e.g., greater than 1400°C) than components composed of superalloys.

While CMC materials can withstand much higher operating temperatures, CMCs have comparably lower thermal conductivity than superalloys. To increase their operational lifespans, precautions can be taken to cool CMC components by subjecting the components, or sections thereof, to a flow of cooling fluid (e.g., air).

In this regard, it is particularly desirable to take steps to efficiently cool CMC components using available cooling air flows and to use the cooling air in an efficient manner. Providing CMCs with structural features that enhance cooling is one way to increase cooling efficiency. For example, CMC components can be provided with cooling cavities to allow cooling air to cool the interior of the CMC component. To allow the ingress of exterior cooling air into the cooling cavities, cooling holes are provided in the CMC components to achieve fluid communication between the exterior of the CMC component and the cooling cavities.

During production of the CMC components defects can occur in forming such cooling holes which can lead to reduce cooling efficiency (e.g., improper alignment of cooling holes, improper positioning of cooling holes, incomplete cooling holes, oversized and/or irregularly shaped cooling holes, double drilled cooling holes, cooling holes plugged or partially plugged by subsequent coatings). Such defects in the original equipment manufacture can result in such CMC components being discarded. Additionally, during operation of the gas turbine engine, oxidation, foreign object damage (FOD), and/or domestic object damage (DOD) can lead to cooling holes being damaged thus reducing cooling efficiency.

Thus, there is thus a continuing need for methods to repair defective and/or damaged cooling holes in CMC components exposed to high temperature gas flow.

### SUMMARY OF THE INVENTION

In general, the present disclosure relates to methods for repairing defective and/or damaged CMC components. In particular, the present disclosure relates to methods for repairing defective or damaged cooling holes in CMC components.

The present disclosure is directed, in a first aspect, to a method for repairing cooling holes in ceramic matrix composite (CMC) component comprising:
optionally removing a coating system on the CMC component if present,
filling the one or more defective or damaged cooling holes by applying a ceramic material patch or plug to form patched cooling hole(s) and subsequently subjecting the patched cooling hole(s) to a densification process,
remachining the patched cooling hole(s) of the CMC component, and
optionally reapplying a coating system to the CMC component.

The present disclosure is also directed, in a further aspect, to a method of replacing defective cooling holes in a CMC component comprising:
testing a CMC component having a plurality of cooling holes and determining that one or more of the cooling holes is/are defective,
optionally removing a coating system on the CMC component if present,
filling the one or more defective cooling holes by applying a ceramic material patch or plug to form patched cooling hole(s) and subsequently subjecting the patched cooling hole(s) to a densification process,
remachining the patched cooling hole(s) of the CMC component, and
optionally reapplying a coating system to the CMC component.

The present disclosure is further directed, in an additional aspect, to a method of repairing a gas turbine engine having one or more CMC components with cooling holes, the method comprising:
determining that a CMC component of the gas turbine engine has one or more damaged cooling holes,
optionally removing a coating system on the CMC component if present,
filling the one or more damaged cooling holes by applying a ceramic material patch or plug to form patched cooling hole(s) and subsequently subjecting the patched cooling hole(s) to a densification process,
remachining the patched cooling hole(s) of the CMC component, and
optionally reapplying a coating system to the CMC component.

In further embodiments of the present disclosure, including further embodiments of the above exemplary embodiments, prior to filling the one or more defective or damaged cooling holes by applying a ceramic material patch or plug, the defective or damaged cooling hole(s) are machined to match the ones they are replacing or they are drilled with larger openings or at different angles to improve upon the original design.

In further embodiments of the present disclosure, including further embodiments of the above exemplary embodiments, the remachined patched cooling hole(s) can be manufactured to be the same size, angle, and shape as the original cooling holes or that they can be a different size (e.g., smaller or larger holes) they can have different angles, and/or they can have a different shape (e.g., holes can be replaced by slots or vice versa).

In further embodiments of the present disclosure, including further embodiments of the above exemplary embodiments, the ceramic material patch comprises SiC fiber tows.

In further embodiments of the present disclosure, including further embodiments of the above exemplary embodiments, the ceramic material patch comprises woven ceramic fiber tows.

In further embodiments of the present disclosure, including further embodiments of the above exemplary embodiments, the ceramic material patch comprises two-dimensional woven ceramic fiber plies.

In further embodiments of the present disclosure, including further embodiments of the above exemplary embodiments, the woven ceramic fiber plies are partially predensified.

In further embodiments of the present disclosure, including further embodiments of the above exemplary embodiments, the woven ceramic fiber plies are partially predensified by chemical vapor infiltration melt infiltration, or polymer infiltration and pyrolysis.

In further embodiments of the present disclosure, including further embodiments of the above exemplary embodiments, the ceramic material patch comprises non-woven ceramic fiber tows.

In further embodiments of the present disclosure, including further embodiments of the above exemplary embodiments, the densification process is a melt infiltration process.

In further embodiments of the present disclosure, including further embodiments of the above exemplary embodiments, the melt infiltration process uses molten Si.

In further embodiments of the present disclosure, including further embodiments of the above exemplary embodiments, the patched cooling holes are redrilled using a laser or ultrasonic machining.

In further embodiments of the present disclosure, including further embodiments of the above exemplary embodiments, the patched cooling holes are redrilled using a water jet guided laser.

In further embodiments of the present disclosure, including further embodiments of the above exemplary embodiments, the CMC component is a BOAS, a BOAS segment, a blade, a blade platform, a vane, a vane platform, a combustor liner, a support ring, a nozzle liner, a rotor side plate, or flaps of a converging-diverging nozzle (De Laval nozzle).

In further embodiments of the present disclosure, including further embodiments of the above exemplary embodiments, during densification of the patched cooling hole(s), cooling holes which are not damaged or defective are covered or plugged to prevent the materials used during densification from filling these cooling holes.

In further embodiments of the present disclosure, including further embodiments of the above exemplary embodiments, cooling holes which are not damaged or defective are covered with graphite tooling during densification.

In further embodiments of the present disclosure, including further embodiments of the above exemplary embodiments, cooling holes which are not damaged or defective are plugged with graphite during densification and the graphite is subsequently drilled out or burnt out.

In further embodiments of the present disclosure, including further embodiments of the above exemplary embodiments, prior to filling the one or more defective or damaged cooling holes, a plurality of adjacent cooling holes are drilled out to form a slot, and the ceramic material patch is applied to the slot to form the patched cooling hole(s).

### BRIEF DESCRIPTION OF FIGURES

The features of the disclosure believed to be novel and the elements characteristic of the invention are set forth with particularity in the appended claims. The figures are for illustration purposes only and are not drawn to scale. The disclosure itself, however, both as to organization and method of operation, can best be understood by reference to the description of the preferred embodiment(s) which follows, taken in conjunction with the accompanying drawings in which:
- Fig. 1: schematically illustrates a partial cross section of an exemplary gas turbine engine;
- Fig. 2: is a flow chart showing steps for repairing cooling holes in ceramic matrix composite (CMC) component;
- Fig. 3: is a cross sectional view of a CMC component with defective and damaged cooling holes;
- Fig. 4: is a cross sectional view of a CMC component in which a ceramic material patch has been applied to defective and damaged cooling holes in accordance with the present disclosure;
- Fig. 5: is a cross sectional view of a CMC component in which the ceramic material patch has been subjected to densification in accordance with the present disclosure; and
- Fig. 6: is a cross sectional view of a CMC component in which adjacent cooling holes have been drilled out to form a slot prior to applying a ceramic material patch in accordance with the present disclosure.

### DETAILED DESCRIPTION OF THE INVENTION

The embodiments of the present disclosure can comprise, consist of, and consist essentially of the features and/or steps described herein, as well as any of the additional or optional ingredients, components, steps, or limitations described herein or would otherwise be appreciated by one of skill in the art.

Before explaining at least one embodiment of the inventive concepts disclosed herein in detail, it is to be understood that the inventive concepts are not limited in their application to the details of construction and the arrangement of the components or steps or methodologies set forth in the following description or illustrated in the drawings. In the following detailed description of the embodiments of the inventive concepts, numerous specific details are set forth in order to provide a more thorough understanding of the inventive concepts. It will be apparent to one skilled in the art, however, having the benefit of the instant disclosure that the inventive concepts disclosed herein may be practiced without these specific details.

The present disclosure provides a method for repairing a CMC component which involves the use of ceramic material patch or plug to fill or patch one or more defective or damaged cooling holes by in a CMC component and subsequently subjecting the patched cooling hole(s) to a densification process.

In the discussion below, axial refers to a direction that coincides with the longitudinal axis of the engine. Radial refers to a direction that is radial with respect to the longitudinal axis of the engine. Circumferential refers to a direction that corresponds to the circumference of a circle around the longitudinal axis of the engine. The leading edge/portion of a structure is the edge/portion that faces in the direction toward the flow of the hot gases, i.e., faces upstream. The trailing edge/portion of a structure is the edge/portion that the faces in the direction away from the flow of the hot gases, i.e., faces downstream.

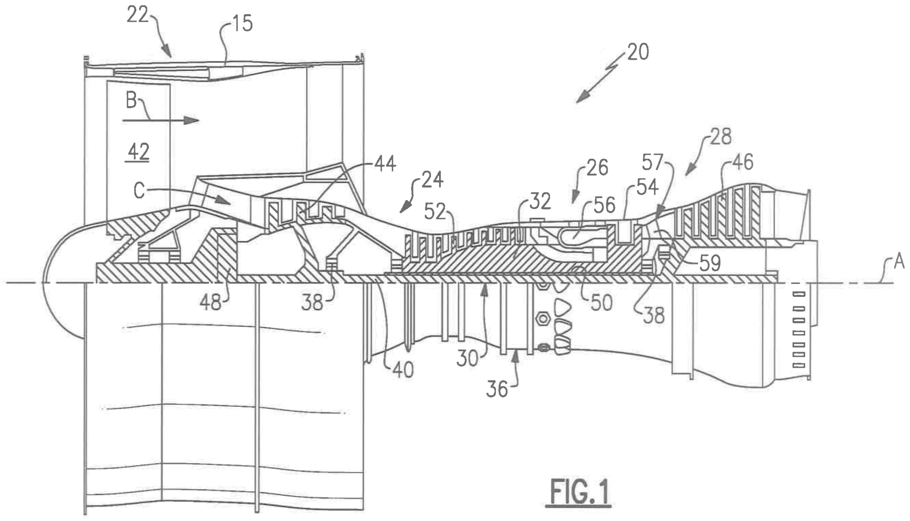

Fig. 1 schematically illustrates an example of a gas turbine engine 20 (i.e., a two-spool turbofan) which includes a fan section 22, a compressor section 24, a combustor section 26, and a turbine section 28. Fan section 22 drives air along a bypass flow path B in a bypass duct defined within a housing 15, and also along a core flow path C for compression in compressor section 24, with subsequent introduction into combustor section 26, followed by expansion through turbine section 28. Although Fig. 1 depicts a two-spool turbofan gas turbine engine, it should be understood that the concepts described herein are not limited to use with two-spool turbofans engines and may be applied to other types of turbine engines.

Engine 20 generally includes a low-speed spool 30 and a high-speed spool 32 mounted for rotation about an engine central longitudinal axis A, relative to an engine static structure 36, via several bearing systems 38. Various bearing systems 38 at various locations may alternatively or additionally be provided. The location of bearing systems 38 may be varied as appropriate to the application.

The low-speed spool 30 generally includes an inner shaft 40 that interconnects, a first (or low) pressure compressor 44 and a first (or low) pressure turbine 46. Inner shaft 40 is connected to fan 42 through a speed change mechanism, which in this exemplary embodiment is illustrated as a geared structure 48 to drive fan 42 at a lower speed than the low-speed spool 30. High-speed spool 32 includes an outer shaft 50 that interconnects a second (or high) pressure compressor 52 and a second (or high) pressure turbine 54. Combustor 56 is positioned between high pressure compressor 52 and high-pressure turbine 54. A mid-turbine frame 57 of the engine static structure 36 may be arranged generally between the high-pressure turbine 54 and the low-pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core air flow is first compressed by low pressure compressor 44, and then by the high-pressure compressor 52. Thereafter, the core air flow is mixed and burned with fuel in combustor 56, then expanded in high pressure turbine 54 and low-pressure turbine 46. The mid-turbine frame 57 includes airfoils 59 which are in the core airflow path C. The turbines 46 and 54 rotationally drive the respective low-speed spool 30 and high-speed spool 32 in response to the expansion. It will be appreciated that each of the positions of the fan section 22, compressor section 24, combustor section 26, turbine section 28, and fan drive gear system 48 may be varied. For example, gear system 48 may be located aft of the low-pressure compressor, or aft of the combustor section 26 or even aft of turbine section 28, and fan 42 may be positioned forward or aft of the location of gear system 48.

The turbine section 28 includes at least one rotor and at least one blade extending radially outwardly from the rotor. The turbine section 28 may further include a blade outer air seal(s) (BOAS(s)). The blade outer air seal can be an assembly of a plurality of BOAS segments that together form an annular shaped shroud around the engine's central longitudinal axis A which is positioned between an outer casing of the engine and the turbine blade(s) of the turbine section.

As noted above, gas turbine engine components can be made from CMC materials. Such components include blade outer air seal(s) (BOAS(s)), BOAS segments, other seals, vane airfoils and platforms therefor, blade airfoils and platforms therefor, combustor liners, support rings, nozzle liners, rotor side plates, and flaps of converging-diverging nozzles (De Laval nozzle).

In general, these CMC components are prepared by first creating a CMC preform which serves as the initial framework for creating the CMC component. The preform contains a stack of fabric sheets or plies in which the stack is formed via a layup process. The plies are made from ceramic fibers, or bundles of ceramic fibers called tows, held together with a binder. The fiber tows can be in the form of unidirectional tows or can be woven fibers. For example, the fibers can be woven into a two-dimensional fabric sheet or ply and then the plies are stacked during the layup process to form the preform. Alternatively, the preform can be in the form of a three-dimensional weave wherein, for example, a plurality of warp fibers are interwoven through a plurality of weft fiber layers. Binders can be used to help hold the fibers/plies together to provide a certain rigidity to the preform, for example, polymeric binders such as polyvinyl alcohol (PVA) or polyvinyl butyral (PVB).

The fibers/filaments used in the CMC preforms may be, for example, silicon carbide (SiC), carbon, mullite, zirconium carbide (ZrC), hafnium carbide (HfC), silicon nitride, aluminum oxide, or combinations thereof. The ceramic fibers may also be oxycarbide-, oxynitride-, carbonitride-, silicate-, boride-, phosphide-, or oxide-based fibers. In still further examples, the fibers are fully crystalline, partially crystalline, or predominantly amorphous or glassy. In one particular example, the fibers are SiC fibers.

The fibers of the preform can, optionally, be provided with one or several interfaces deposited prior to introduction of a matrix material into the preform. This interface coating can be, for example, a coating of boron nitride, silicon-doped boron nitride, boron-doped carbon, boron carbide, titanium nitride, or zirconium nitride which is applied by chemical vapor infiltration (CVI). The interface coating(s) is used to ensure that the composite will fail in a non-brittle manner by preventing crack formation and/or propagation.

After the CMC preform is formed by the layup, the preform is subjected to densification to add matrix material to fill the remaining void spaces within the preform. This procedure stiffens and strengthens the fiber layers or woven plies of ceramic fiber tows to form the CMC. Thus, densification involves reducing the porosity within the preform, making it more solid and robust, by filling the remaining pores within the preform. The goal is to achieve a higher relative density, and ensure that the final CMC structure is compact and free of large voids. In one particular example, the CMC material contains SiC fibers within a SiC matrix, also referred to as a SiC/SiC composite.

Various methods can be used to add matrix material during densification. These include, but are not limited to, chemical vapor infiltration (CVI), reactive melt infiltration (RMI) (such as liquid silicon infiltration (LSI)), and polymer infiltration and pyrolysis (PIP).

Chemical vapor infiltration (CVI) involves introducing gaseous precursors into the porous CMC preform. These precursors react at the surface of the fibers, depositing additional material and filling the voids. Chemical liquid-vapor deposition (CLVD) uses liquid precursors that vaporize and infiltrate the preform. The liquid-to-vapor conversion occurs at the fiber surface, leading to densification.

Liquid silicon infiltration (LSI) utilizes liquid (molten) silicon to infiltrate the CMC preform. Silicon reacts with carbon or other constituents of the CMC preform, forming a dense matrix.

In polymer infiltration and pyrolysis (PIP), a polymer precursor is infiltrated into the preform. The subsequent pyrolysis process converts the polymer into a ceramic matrix. During pyrolysis the matrix shrinks leading to microcracks, which require repeating the polymer and infiltration cycle multiple times.

As mentioned above, the CMC component can be provided with cooling holes. Such cooling holes can pass through a CMC component, i.e., from a non-gaspath side to a gaspath side to provide a flow of cooling air to the hot gaspath surface of the component. Additionally, cooling holes can be provided that communicate with a cooling cavity within the CMC component to allow for the flow of cooling air into an out of the cooling cavity, e.g., form a non-gaspath side of the CMC component into the interior of the CMC component to provide internal cooling.

The shape of the cooling holes in terms of the opening and the internal surface is not limited and can vary widely. By way of example, the internal surface cooling holes can be in form of cylindrical passages, slot-shaped passages, oval-shaped passages, lobed-shaped passages trapezoidal passages (e.g., three walls of a rectangular prism are angled outward to form a trapezoidal prism), rhombus or diamond-shaped passages, etc., and the opening of the cooling holes can be circular, oval, rectangular, lobed, rhombus, etc. In one embodiment, the cooling holes are cylindrical in form. The size of the cooling holes can also vary. For example, the cooling holes can have a diameter of 0.005 to 0.05 inches (0.127 to 1.27 mm) such as 0.010 - 0.030 inches (0.254 to 0.762 mm), 0.010 - 0.015 inches (0.254 to 0.381 mm), or 0.015 - 0.025 inches (0.381 to 0.635 mm).

The arrangement of the cooling holes can also vary. For example, cooling holes can be positioned in rows or can be staggered. Additionally, the cooling holes can be perpendicular to the surface of a CMC substrate or can be angled with respect to the surface of the CMC substrate, for example, at an angle of 10° to 50°, such as 15° - 50° or 15° - 45° or 20° - 40°, with respect to the surface of the CMC substrate.

The cooling holes can be produced by a variety of techniques, for example, by inserting fugitive materials such as carbon or graphite rods into preforms, or by physical treatments such as mechanical drilling, ultrasonic machining (e.g., ultrasonic impact grinding, etc.), dry laser drilling, electrical discharge machining and/or water-guided laser drilling. Factors that can impact the choice of drilling technique include whether drilling is before or after densification, the type of binder used in making the CMC preform, and the desired precision for forming the holes. For example, in one embodiment the cooling holes are formed after densification by ultrasonic machining. In another embodiment, the cooling holes are formed in the preform (before densification) by water-guided laser drilling.

As mentioned, the drilling of the cooling holes can result in defects which reduces cooling efficiency. Also, during operation, cooling holes can be damaged, for example due to FOD/DOD damage or deterioration of the surface of the CMC component. In accordance with the present disclosure, the damaged/defective cooling holes are repaired using a patch or plug of ceramic material.

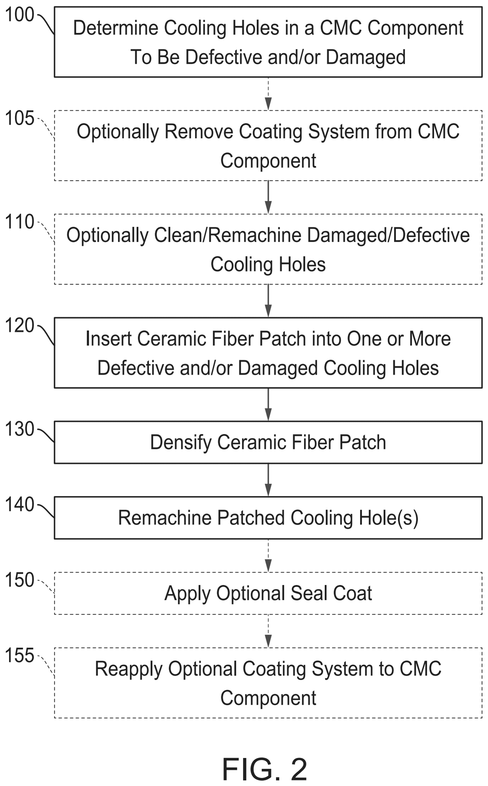

Fig. 2 shows a flowchart for the repair process according to the present disclosure. In step 100, the CMC component is inspected and determined to have damaged or defective cooling holes. This assessment can be performed visually (visual inspection) or by more precise detection techniques such as air flow testing, pin gauge testing, thermography testing, X-ray computed microtomography, or water flow testing.

If the CMC component has a coating system applied thereto, such as an environmental barrier coating (EBC) or an abradable coating, the coating system can be removed, either before or after an optional cleaning or remachining of the cooling hole(s). See step 105 of Fig. 2. Removal of the coating system layer(s) can be achieved through a variety of techniques such as chemically stripped, mechanical grinding, milling, abrading, belt sanding, water jet, etc. The coating system can be removed partially, for example, only at the region surrounding the damaged/defective cooling hole(s) that is/are to be repaired, or the coating system can be removed entirely from the surface where the damaged/defective cooling hole(s) is/are present.

In repairing damaged or defective cooling holes, the repair process may be facilitated by optionally cleaning or remachining (e.g., drilling, lasering, etc.) the damaged/defective cooling holes prior to insertion of the plug(s). See optional step 110 in Fig. 2. The cooling holes can be remachined to match the ones they are replacing or they could be remachined with larger openings or at different angles to improve upon the original design. The resultant remachined holes can be in the form of various shapes as described above, e.g., cylindrical, slot, trapezoidal, square, etc. Additionally, several cooling holes adjacent to the damaged or defective cooling hole to form a slot within a row of cooling holes or a slot spanning multiple adjacent rows of cooling holes. The walls of the slot can be vertical or can be angled to facilitate insertion of the plug.

Once damaged/defective cooling hole(s) are identified and optionally remachined, a ceramic patch material (ceramic plug) is prepared and inserted into the damaged/defective cooling hole(s) as indicated in step 120 of Fig. 2. The plug can be prepared from ceramic fiber materials as described above with regards to the preparation of the CMC preform. For example, the plug can be a ceramic fabric material of two-dimensional ceramic fiber plies or a plurality of unidirectional ceramic fiber tows, optionally with a binder such as PVA (polyvinyl alcohol) or PVB (polyvinyl butyral). Additionally, the plug of ceramic plies or unidirectional ceramic fibers may further contain particle fillers such as SiC to help fill the void space prior to densification. Further, the fibers of the patch/plug may also be provided with interface coatings (e.g., a coating of boron nitride, silicon-doped boron nitride, boron-doped carbon, boron carbide, etc.) to minimize propagation of cracks. In one particular example, the ceramic fiber material is made of SiC fibers. The plug can be also partially densified meaning that the ceramic patch material has been subjected to a densification process to partially densify the material. The densification process can be, for example, CVI or PIP.

In step 130, after the insertion of the plug, the plug is subjected to densification to add matrix material to fill void spaces within the plug and between the plug and the walls of the cooling hole. This procedure yields a matrix material in which the ceramic fiber tows are embedded as reinforcing materials. The goal is to fill the damaged/defective cooling holes as completely as possible with ceramic matrix material. In one particular example, the plug is made of SiC fibers and the matrix material is SiC.

Various methods can be used to add matrix material during densification of the plug. These include, but are not limited to, chemical vapor infiltration (CVI), reactive melt infiltration (RMI or MI) (such as liquid silicon infiltration (LSI)), and polymer infiltration and pyrolysis (PIP). It is desirable that the process used during densification of the plug is conducted a lower temperature than the process used for manufacturing the CMC component in order to minimize damage to the substrate resulting from the high temperatures. In one embodiment, the plug is densified by RMI using molten Si. In another embodiment, the plug is densified by an oxide melt infiltration process wherein the plug is subjected to slurry infiltration of a slurry of alumina or mullite, followed by melt infiltration of magnesium alumina silicate (MAS). The infiltrated plug is then thermally processed to react the oxide and MAS.

During densification of the plug, to prevent matrix material from entering other cooling holes that are not being repaired, these cooling holes can be covered, for example, by graphite tooling. Alternatively, these cooling holes can be plugged with graphite material which is subsequently removed by drilling or by heat treatment (burnt out).

In step 140, the now plugged cooling holes are remachined (e.g., redrilled). This can be accomplished, for example, using any of the techniques mentioned for initial forming the cooling holes. For example, the cooling holes that were initially formed by ultrasonic machining can be remachined by laser. For example, the cooling holes can be redrilled by, for example, mechanical drilling, ultrasonic machining (also known as ultrasonic impact grinding), dry laser drilling and/or water-guided laser drilling. Electrical discharge machining (EDM) can also be used for redrilling the cooling holes if the CMC component has sufficient electrical conductivity (e.g., if the CMC component contains conductive fibers). The redrilled/remachined holes can be the same size orientation as the original cooling holes or that they can be smaller/larger holes or holes having different angles. In another embodiment, the cooling holes can be replaced by slots. Similarly, if the original cooling openings are in the form of slots, the cooling slots could be replaced by cooling holes. In step 150, an optional seal coat can be applied after the cooling holes are redrilled. The seal coat will protect the exposed surface and fibers of the remachined hole. For example, a thin SiC seal coat layer can be applied by CVI.

On the other hand, if a coating system was previously removed from the CMC component, the removed coating system can be reapplied. See step 155 in Fig. 2. The layer(s) of the coating system can be reapplied using conventional techniques such as atmospheric plasma spray (APS), vacuum plasma spraying (VPS), low pressure plasma spray (LPPS), suspension plasma spraying (SPS), high velocity oxygen fuel spraying (HVOF), high velocity air fuel spraying (HVAF) chemical vapor deposition (CVD), physical vapor deposition (PVD), electron beam-physical vapor deposition (EB-PVD), plasma-spray physical vapor deposition (PS-PVD), or slurry coating.

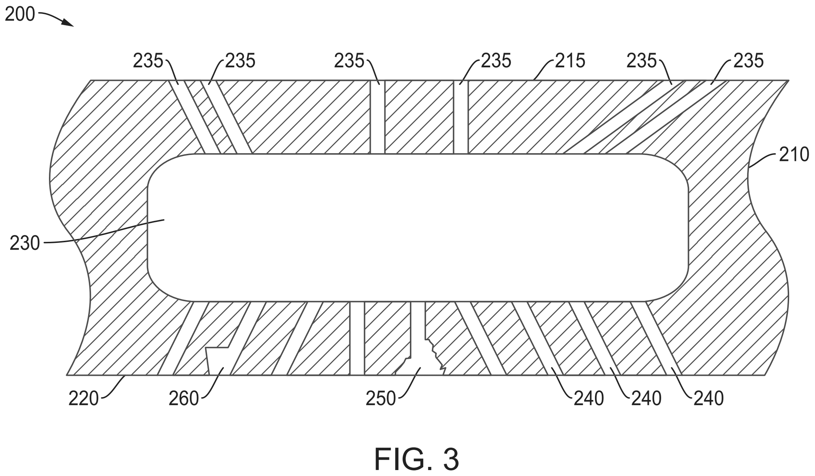

Fig. 3 is a schematic cross section of a portion of a CMC component 200 (e.g., a BOAS segment). The component 200 includes a substrate 210 having a radial outer surface 215 and a radial inner surface 220. Additionally, the component 200 has a cooling cavity 230 beneath the radial outer surface 215, a plurality of inlet cooling holes 235, and a plurality of outlet cooling holes 240. Cooling air enters the cooling cavity through the openings of inlet cooling holes 235 at the radial outer surface 215 and is discharged through the openings of the outlet cooling holes 240 at radial inner surface 220 thus providing for the flow of cooling air from the region above the radial outer surface 215 into and out of the cooling cavity 230.

Fig. 3 further illustrates a damaged cooling hole 250 and a defective cooling hole 260. Outlet cooling hole 250 illustrates damaged during operation, for example, by material degradation due to oxidation or damage resulting from FOD or DOD, resulting in the opening of outlet cooling hole 250 being wider than the openings of the non-damaged cooling holes 240. Defective cooling hole 260 illustrates a defective cooling hole in which the cooling hole was improperly drilled during manufacturing. Damaged or defective cooling holes can also result from enlargement of a cooling hole during operation due to loss of material from recession, double-drilled cylindrical holes (8 shaped), and misalignment of the metering hole and the trapezoidal diffuser shape for diffusor holes.

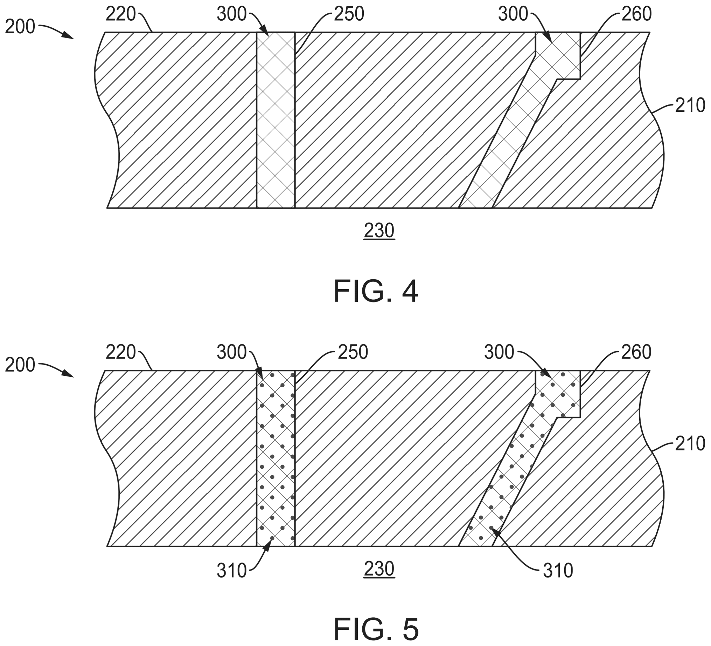

Figs. 4 and 5 are each a schematic cross section of a portion of a CMC component 200. In this view, the radial inner surface 220 is the top surface. In Fig. 4, damaged outlet cooling hole 250 and defective outlet cooling hole 260 have plugs of the ceramic patch material 300 inserted therein. Fig. 5 illustrates the plugged cooling holes 250 and 260 after the plugs of the ceramic patch material 300 have been subjected to densification to include a ceramic matrix 310 surrounding the fibers of the plugs 300.

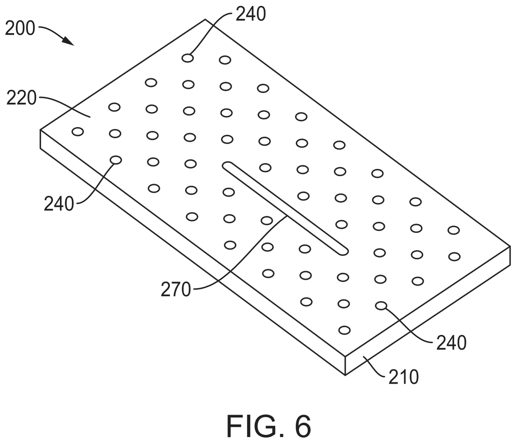

As mentioned above, the damaged/defective cooling holes can be cleaned or remachined prior to insertion of the plug/patch. See Fig. 2 step 110. As indicated, as part of this remachining, several cooling holes adjacent to the damaged or defective cooling hole to form a slot within a row of cooling holes or a slot spanning multiple adjacent rows of cooling holes. The walls of the slot can be vertical or can be angled to facilitate insertion of the plug. Fig. 6 illustrates this aspect. Fig. 6 shows a top perspective view of CMC component 200 in which a plurality of cooling holes 240 are provided. The cooling holes are arranged in rows wherein the cooling choles of adjacent rows are offset from one another. In this embodiment, several adjacent cooling holes in one row have been drilled to form a slot 270. Slot 270 can be repaired using the method of the present disclosure.

The present disclosure provides an efficient method for repairing damaged or defective CMC components to eliminate waste during manufacture and/or to prolong the operational lifespan of the CMC components.

While the present disclosure has been particularly described, in conjunction with specific preferred embodiments, it is evident that many alternatives, modifications and variations will be apparent to those skilled in the art in light of the foregoing description. It is therefore contemplated that the appended claims will embrace any such alternatives, modifications and variations as falling within the true scope and spirit of the present disclosure.

## Claims

1. A method of repairing a ceramic matrix composite (CMC) component (200) having one or more defective or damaged cooling holes (250, 260), comprising:
optionally removing a coating system on the CMC component (200) if present,
filling the one or more defective or damaged cooling holes (250, 260) by applying a ceramic material patch or plug to form patched cooling hole(s) and subsequently subjecting the patched cooling hole(s) to a densification process,
remachining the patched cooling hole(s) of the CMC component (200), and
optionally reapplying a coating system to the CMC component (200).

2. The method according to claim 1, wherein the ceramic material patch comprises SiC fiber tows.

3. The method according to claim 1 or 2, wherein the ceramic material patch comprises woven ceramic fiber tows.

4. The method according to claim 3, wherein the ceramic material patch comprises two-dimensional woven ceramic fiber plies.

5. The method according to claim 4, wherein the woven ceramic fiber plies are partially predensified,
wherein, optionally, the woven ceramic fiber plies are partially predensified by chemical vapor infiltration, melt infiltration, or polymer infiltration and pyrolysis.

6. The method according to claim 1 or 2, wherein the ceramic material patch comprises non-woven ceramic fiber tows.

7. The method according to any preceding claim, wherein the densification process is a melt infiltration process,
wherein, optionally, the melt infiltration process uses molten Si.

8. The method according to any preceding claim, wherein the patched cooling holes are redrilled using a laser or ultrasonic machining,
wherein, optionally, the patched cooling holes are redrilled using a water jet guided laser.

9. The method according to any preceding claim, wherein the CMC component (200) is a BOAS, a BOAS segment, a blade, a blade platform, a vane, a vane platform, a combustor liner, a support ring, a nozzle liner, a rotor side plate, or flaps of a converging-diverging nozzle (De Laval nozzle).

10. The method according to any preceding claim, wherein during densification of the patched cooling hole(s), cooling holes which are not damaged or defective are covered or plugged to prevent the materials used during densification from filling these cooling holes.

11. The method according to claim 10, wherein:
cooling holes which are not damaged or defective are covered with graphite tooling during densification; and/or
cooling holes which are not damaged or defective are plugged with graphite during densification and the graphite is subsequently drilled out or burnt out.

12. The method according to any preceding claim, wherein prior to filling the one or more defective or damaged cooling holes (250, 260), a plurality of adjacent cooling holes are drilled out to form a slot (270), and the ceramic material patch is applied to the slot (270) to form the patched cooling hole(s).

13. The method according to any preceding claim, wherein:
prior to filling the one or more defective or damaged cooling holes (250, 260) by applying a ceramic material patch or plug, the defective or damaged cooling hole(s) (250, 260) are machined to match the ones they are replacing or they are drilled with larger openings or at different angles to improve upon the original design; and/or
the redrilled patched cooling hole(s) can be manufactured to be the same size, angle, and shape as the original cooling holes or that they can be a different size, and have a different angle, and or can have a different shape.

14. A method of replacing defective cooling holes (250, 260) in a ceramic matrix composite (CMC) component (200) comprising:
testing a CMC component (200) having a plurality of cooling holes and determining that one or more of the cooling holes is/are defective,
optionally removing a coating system on the CMC component (200) if present,
filling the one or more defective cooling holes (250, 260) by applying a ceramic material patch or plug to form patched cooling hole(s) and subsequently subjecting the patched cooling hole(s) to a densification process,
remachining the patched cooling hole(s) of the CMC component (200), and
optionally reapplying a coating system to the CMC component (200).

15. A method of repairing a gas turbine engine (20) having one or more CMC components (200) with a plurality of cooling holes, the method comprising:
determining that a CMC component (200) of the gas turbine engine (20) has one or more damaged cooling holes (250, 260),
optionally removing a coating system on the CMC component (200) if present,
filling the one or more damaged cooling holes (250, 260) by applying a ceramic material patch or plug to form patched cooling hole(s) and subsequently subjecting the patched cooling hole(s) to a densification process,
remachining the patched cooling hole(s) of the CMC component (200), and
optionally reapplying a coating system to the CMC component (200).
